# EUROPÄISCHE PATENTSCHRIFT

(11) **EP 3 072 853 B1**
(45) Veröffentlichungstag und Bekanntmachung des Hinweises auf die Patenterteilung: **31.07.2019**
(21) Anmeldenummer: 15160555.7
(22) Anmeldetag: 24.03.2015
(51) Int. Cl.: C01F 7/44, C04B 35/10, C04B 5/00, C22B 21/00, C22B 7/04, C22B 1/00, C22B 1/14, C04B 35/622, C04B 35/626

(54) **VERFAHREN ZUR HERSTELLUNG VON ALUMINIUMOXID-KALZINATEN**
METHOD FOR THE PREPARATION OF ALUMINIUM OXIDE CALCINATES
PROCÉDÉ DE FABRICATION D'OXYDE D'ALUMINIUM CALCINÉ

(43) Veröffentlichungstag der Anmeldung: 28.09.2016
(73) Patentinhaber: Real Alloy Germany GmbH, 41515 Grevenbroich (DE)
(72) Erfinder: Ruschmann, Florian, 81669 München (DE); Köring, Ralf, 41470 Neuss (DE)
(74) Vertreter: Müller Schupfner & Partner Patent- und Rechtsanwaltspartnerschaft mbB

(56) Entgegenhaltungen:
- US-A- 5 873 924
- US-A- 6 110 434
- LOPEZ F A ET AL: "Recovery of alumina from salt slags in aluminium remelting", CANADIAN METALLURGICAL QUARTERLY, Bd. 33, Nr. 1, 1994, Seiten 29-33, XP009186095, PERGAMON PRESS INC
- TSAKIRIDIS P E ED - YANG GORDON C C: "Aluminium salt slag characterization and utilization - A review", JOURNAL OF HAZARDOUS MATERIALS, ELSEVIER, AMSTERDAM, NL, Bd. 217, 16. März 2012 (2012-03-16), Seiten 1-10, XP028412593, ISSN: 0304-3894, DOI: 10.1016/J.JHAZMAT.2012.03.052 [gefunden am 2012-03-27]

## Beschreibung

Die Erfindung betrifft ein Verfahren zur Herstellung von Aluminiumoxid-Kalzinaten.

Die Herstellung von sekundärem Aluminium, d.h. von recyceltem Aluminium aus Schrott und Krätzen, erfolgt unter anderem in kippbaren Drehtrommelöfen. Diese sind als Feuerfest-zugestellte zylindrische oder konische Ofengefäße mit Dreh- und Kippfunktionen definiert. Darin werden Aluminiumschrott und -krätzen, mit oder ohne Schmelzsalz, bei etwa 650°C bis 800°C eingeschmolzen. Das Salz bindet die oxidischen Verunreinigungen, verhindert die Oxidation des Aluminiums und fördert die Koagulation der fein verteilten Aluminiumtröpfchen. Neben der Aluminiumschmelze entsteht folglich eine metallarme Schlacke, die Aluminium-Salzschlacke. Diese setzt sich insbesondere aus oxidischen Verunreinigungen (ca. 55 Gew.-%), dem Schmelzsalz (ca. 40 Gew.-%) und einem geringen Anteil an Restaluminium (ca. 5 Gew-%) zusammen. Aufgrund unterschiedlicher Dichten lässt sich die Salzschlacke von dem Aluminium getrennt abgießen und somit das Aluminium zurückgewinnen.

In der Regel wird die Salzschlacke anschließend aufbereitet und der Salzanteil erneut zur Rückgewinnung von Aluminium eingesetzt. Dabei wird die Salzschlacke üblicherweise zunächst gemahlen und das Restaluminium herausgesiebt. Der verbleibende Rest (Salz und oxidische Verunreinigungen) wird einer fest-flüssig Trennung zugeführt, und die flüssige Salzlösung wird in einer Salzkristallisationsanlage weiterverarbeitet. Die unlöslichen, oxidischen Verunreinigungen des Restes (Feststoff) werden salzfrei gewaschen, entwässert und autogen getrocknet. Dabei macht man sich insbesondere die ausgeprägte Reaktionsintensität (exotherme Reaktion) nach dem Prozess in einem Reaktor (Degassing Hall) zunutze, in dem die Verdampfung und Ausgasung des Feststoffes kontrolliert stattfindet. Diese im Wesentlichen aus Al₂O₃ bestehenden Oxide (Aluminiumoxid-haltige Konzentrate) werden üblicherweise in der Zementindustrie und bei der Herstellung von Mineralwolle als Rohstoff genutzt.

"The Recovery of Alumina From Salt Slags in Aluminium Remelting", Canadian Metallurgical Quarterly, 33(1):29-33, 1994 beschreibt ein solches Verfahren zur Rückgewinnung von Aluminiumoxid aus Aluminiumsalzschlacken.

Der Erfindung liegt die Aufgabe zugrunde, ein kalziniertes Material, insbesondere Aluminiumoxid-Kalzinate, besonders flexibel, einfach und/oder wirtschaftlich herzustellen.

Die Aufgabe wird erfindungsgemäß gelöst durch ein Verfahren mit den Merkmalen des Anspruchs 1. Das Verfahren zur Herstellung eines kalzinierten Materials umfasst erfindungsgemäß die folgenden Schritte:
- Bereitstellen eines Aluminiumoxid-haltigen Konzentrates einer aufbereiteten Aluminiumsalzschlacke als Ausgangsmaterial, und
- Kalzinieren des Aluminiumoxid-haltigen Ausgangsmaterials in einem kippbaren Drehtrommelofen zu einem teilweise oder vollständig kalzinierten Material (Aluminiumoxid-Kalzinat). Erfindungsgemäß wird das Aluminiumoxid-haltige Ausgangsmaterial, insbesondere die Grünpellets, in den auf 400 °C bis 850°C vorgeheizten, kippbaren Drehtrommelofen (10) eingebracht und anschließend auf 500°C bis 1100°C erhitzt. Ferner wird das Aluminiumoxid-haltige Ausgangsmaterial vor der Kalzinierung bis auf ein Niveau von 5 Gew.-% bis 15 Gew.-% entwässert, insbesondere auf einem Bandfilter, und getrocknet, insbesondere durch Ausnutzung einer exothermen Nachreaktion.

Unter Kalzinieren wird insbesondere eine thermische Behandlung des Aluminiumoxid-haltigen Ausgangsmaterials verstanden, bei welcher sogenannte Kalzinate entstehen. Insbesondere wird unter einer Kalzinierung das Brennen eines Materials mit dem Ziel der Entfernung von gebundenem Wasser und flüchtigen Bestandteilen und das Zusammensintern der Teilchen verstanden. Ein Grundgedanke der Erfindung kann darin gesehen werden, das Kalzinieren des Ausgangsmaterials in einem kippbaren Drehtrommelofen durchzuführen. Die Durchführung der Kalzinierung in einem Drehtrommelofen, insbesondere in einem kippbaren Drehtrommelofen, ermöglicht eine sehr flexible, auf die Einsatzmenge abgestimmte und vergleichsweise einfache Prozessführung. Mit diesem Aggregat können die einzelnen Prozessschritte während des Kalzinierungsprozesses unmittelbar beeinflusst werden und damit direkt auf die finale Produktqualität Einfluss genommen werden. Hierbei sind vor allem die flexible Einstellung der verwendeten Brennerintensität, der Drehgeschwindigkeit und - richtung des Ofens, des Neigungswinkels des Ofens und der Verweilzeit des Materials im Ofen zu nennen. Diese Flexibilität ist ein wesentlicher Vorteil gegenüber den starren Drehrohröfen, die keinen unmittelbaren Eingriff in die jeweiligen Prozessstufen des Kalzinierungsprozesses ermöglichen. Im Vergleich zu den starren Drehrohröfen ermöglicht ein kippbarer Drehtrommelofen somit eine deutlich flexiblere Prozess- und Qualitätsführung.

Der Kalzinierungsprozess läuft in dem kippbaren Drehtrommelofen chargenweise bzw. diskontinuierlich (Batch-Prozess) ab. Dies ermöglicht im Gegensatz zu anderen Produktionsprozessen (beispielsweise in einem Drehrohrofen), die entscheidenden Prozessparameter nicht nur flexibler, sondern über den gesamten Kalzinierungsprozess hinweg kontinuierlich zu verändern und an das gegebenenfalls variierende Ausgangsmaterial anzupassen. Dadurch kann auf Veränderungen in den Eigenschaften des Ausgangsmaterials, hier insbesondere der Aluminiumoxid-Konzentrate einer aufbereiteten AluminiumSalzschlacke, schnell und adäquat reagiert werden, so dass die gewünschte Produktqualität sichergestellt werden kann. Die diskontinuierliche Arbeitsweise im kippbaren Drehtrommelofen ermöglicht es zudem, in Verbindung mit der hohen Flexibilität dieses Ofenaggregates, verschiedene Kalzinierungsgrade des Materials herzustellen.

Die Kippbarkeit des Drehtrommelofens ist ein weiterer Vorteil, durch den sowohl das Einsatzmaterial (Grünpellets), als auch das fertig kalzinierte Material vergleichsweise einfach und schnell in den Ofen chargiert bzw. wieder entnommen werden kann.

Das erfindungsgemäße Verfahren ermöglicht auf kostengünstige und zuverlässige Weise die Herstellung von Aluminiumoxid-Kalzinaten (kalzinierte Aluminiumoxid-Konzentrate oder kalzinierte Aluminiumoxid-haltige Konzentrate), welche beispielsweise bei der Entschwefelung von Roheisen oder Sekundäreisen einsetzbar sind. Das erfindungsgemäß hergestellte Aluminiumoxid-Kalzinat kann als fluorarmes Additiv für den Entschwefelungsprozess verwendet werden und so beispielsweise das derzeit häufig bei der Entschwefelung verwendete Flussspat ersetzen. Mit dem erfindungsgemäßen Verfahren lassen sich außerdem kostengünstig und zuverlässig feuerfeste Materialien beziehungsweise Ausgangsstoffe für die Herstellung von Feuerfeststeinen oder - massen herstellen, ebenso wie Zuschlagstoffe für die Zementindustrie. Es ist daher bevorzugt, dass das erfindungsgemäß hergestellte Aluminiumoxid-Kalzinat bei der Entschwefelung, insbesondere von Eisen, insbesondere als Tonerdesubstitut, und/oder zur Herstellung von Feuerfeststeinen oder -massen verwendet wird.

Bei dem Ausgangsmaterial handelt es sich erfindungsgemäß insbesondere um ein Konzentrat Aluminium-oxidischer Verunreinigungen aus dem Aufbereitungsprozess einer Aluminiumsalzschlacke. Vorzugsweise enthält das Ausgangsmaterial 50 Gew.-% bis 90 Gew.-%, insbesondere etwa 60 Gew.-% bis 80 Gew.-%, Aluminiumoxid. Je höher der Aluminiumoxidanteil, desto wirtschaftlicher ist insgesamt das Verfahren.

Das insbesondere aus einer Naßaufbereitung der Aluminiumsalzschlacke gewonnene, Aluminiumoxid-haltige Ausgangsmaterial wird vor der Kalzinierung vorzugsweise entwässert und getrocknet. Die Entwässerung/Filtration reduziert den Wasseranteil vorzugsweise auf 20 Gew.-% bis 40 Gew.-% und kann beispielsweise auf einem Bandfilter durchgeführt werden. Zur weiteren Reduktion des Wassergehaltes kann, insbesondere entweder autogen (durch Nutzung der freiwerdenden Wärme einer exothermen Nachreaktion des Aluminiumoxid-Konzentrates, insbesondere durch eine Umsetzung der enthaltenen Nitride) oder durch thermische Zwangstrocknung, vorzugsweise im Bereich von etwa 50 °C bis 150 °C, der Wassergehalt des Aluminiumoxid-Konzentrates weiter reduziert werden, insbesondere auf einen für eine vorzugsweise nachfolgende Agglomeration geeigneten bzw. erforderlichen Gehalt. Der Wasseranteil nach der Trocknung beträgt erfindungsgemäß etwa 5 Gew.-% bis 15 Gew.-%, insbesondere etwa 6 Gew.-% bis 10 Gew.-%.

Es ist bevorzugt, dass das Aluminiumoxid-haltige Konzentrat vor der Kalzinierung, und insbesondere nach der Trocknung, agglomeriert wird. Die hierbei entstehenden Agglomerate, sogenannte Grünpellets, werden dann als agglomeriertes Ausgangsmaterial zur Kalzinierung in den kippbaren Drehtrommelofen eingebracht. Unter Grünpellets werden vorliegend Agglomerate verstanden, die aus einem feuchten, feinkörnigen Feststoff durch Pelletierung (Kugelbildung), Granulierung oder sonstige Verfahren der Agglomerierung entstehen bzw. hergestellt werden. Zudem werden zu den Grünpellets die Agglomerate gezählt, die sich durch die exotherme Reaktion (Nachreaktion) des Aluminiumoxid-haltigen Ausgangsstoffes bzw. Konzentrates, insbesondere während der Trocknung, geformt haben. Diese immer noch feuchten Pellets (Agglomerate) werden vorliegend als Grünpellets bezeichnet, bis sie gesintert bzw. kalziniert (und damit trocken) sind. Erfindungsgemäß werden also vorzugsweise feuchte Pellets (Grünpellets) mit einem Wassergehalt von maximal 15 Gew.-%, insbesondere maximal 10 Gew.-%, zur Kalzinierung in den kippbaren Drehtrommelofen eingebracht. Vorzugsweise weisen die Grünpellets einen Korngrößenbereich von 2 mm bis 20 mm auf.

In einer bevorzugten Ausführungsform wird das Aluminiumoxid-haltige Ausgangsmaterial zumindest teilweise ohne Bindemittelzugabe agglomeriert. Zumindest ein Teil des Aluminiumoxid-haltigen Ausgangsmaterials wird also ohne Zugabe eines Bindemittels agglomeriert.

Grundsätzlich ist aber auch eine Agglomeration des Aluminiumoxid-haltigen Ausgangsmaterials mit Bindemittel möglich.

Bei der Agglomeration werden Grünpellets in einem Korngrößenbereich von vorzugsweise 2 mm bis 20 mm erzeugt (sog. Zielfraktion). Diese Zielfraktion wird dann vorzugsweise direkt in den kippbaren Drehtrommelofen eingebracht.

Zumindest ein Teil der Agglomeration erfolgt in einer bevorzugten Ausführungsform der Erfindung während der, insbesondere autogenen, Trocknung des Aluminiumoxid-haltigen Ausgangsmaterials. Die dabei entstehenden Agglomerate können nach Abtrennung ohne weitere Agglomerierungs-/Pelletierungsschritte direkt in den Drehtrommelofen eingebracht werden.

In einer bevorzugten Ausführungsform des Verfahrens wird das Aluminiumoxid-haltige Konzentrat, insbesondere nach einer Agglomeration, insbesondere nach der Trocknung (und der dabei vorzugsweise erfolgenden (teilweisen) Agglomeration), fraktioniert. Die Fraktionierung kann beispielsweise durch Sieben erfolgen. Dabei werden vorzugsweise Grünpellets innerhalb eines bestimmten Korngrößenbereichs abgetrennt. Diese sogenannte Zielfraktion wird dann als Einsatz direkt in den Drehtrommelofen eingebracht. Unterhalb einer definierten Mindestgröße, beispielsweise einem Durchmesser von 2 mm, wird eine Feinfraktion abgetrennt. Oberhalb einer definierten Maximalgröße, beispielsweise einem Durchmesser von 20 mm, wird eine Grobfraktion abgetrennt. Die Zielfraktion enthält vorzugsweise Grünpellets mit einem Durchmesser von 2 mm bis 20 mm.

Der feinkörnige Fraktionieranteil (Feinfraktion), beispielsweise mit einer Körnung von weniger als 2,0 mm, kann in einer Agglomerationseinrichtung zwangsweise ohne oder mit Verwendung eines Bindemittels pelletiert/granuliert werden. Dabei wird ebenfalls ein Korngrößenbereich von 2 mm bis 20 mm angestrebt. Vorzugsweise nutzt man dazu Pelletierteller, Pelletiertrommeln oder Granuliermischer. Die so entstehenden Pellets werden dann vorzugsweise ebenfalls in den kippbaren Drehtrommelofen chargiert und dort kalziniert.

Die Grobfraktion kann beispielsweise zur weiteren Agglomerierung bzw. Granulierung rückgeführt werden.

Ein weiterer Teil der Agglomeration des Aluminiumoxid-haltigen Ausgangsmaterials kann beispielsweise erfolgen, indem das Ausgangsmaterial (insbesondere ein feinkörniges Ausgangsmaterial oder eine Feinfraktion des Aluminiumoxid-haltigen Ausgangsmaterials) durch einen Abrollvorgang auf einer schiefen Ebene in Anwesenheit einer Benetzungsflüssigkeit zu kugeligen Körpern (Grünpellets) geformt bzw. agglomeriert wird. Im Gegensatz zu bekannten Verfahren, bei denen Bindemittel zugefügt wird, um die Grünpellets bis zur Sinterung bzw. Kalzinierung zu stabilisieren, wird erfindungsgemäß vorzugsweise lediglich Wasser als Benetzungsflüssigkeit gezielt dosiert und das feuchte Ausgangsmaterial durch Rollvorgänge auf einer schiefen Ebene zu kugeligen Körpern geformt. Diese Agglomeration erfolgt vorzugsweise mit einem Ausgangsmaterial mit einer Korngröße von weniger als 2 mm. Weiter vorzugsweise erfolgt diese Agglomeration nach der Trocknung, in welcher der Wassergehalt auf vorzugsweise maximal 15 Gew.-%, insbesondere maximal 10 Gew.-%, reduziert wurde.

Die vorzugsweise nach dem oben dargestellten Verfahren hergestellten Grünpellets werden in dem kippbaren Drehtrommelofen kalziniert. Dabei werden die Grünpellets in dem kippbaren Drehtrommelofen mit definierter Temperaturund Ofenführung sowie definierter Verweilzeit entsprechend den angestrebten Kalzinierungsgraden gebrannt. Das fertige Produkt wird aus dem Ofen ausgetragen und vorzugsweise kontrolliert abgekühlt.

Erfindungsgemäß werden die Grünpellets in einen auf 400°C bis 900°C, bevorzugt 450°C bis 850°C, vorgeheizten kippbaren Drehtrommelofen eingebracht und anschließend auf 500°C bis 1200°C, bevorzugt 500°C bis1100°C, erhitzt.

Die Verweilzeit des Ausgangsmaterials im kippbaren Drehtrommelofen kann flexibel je nach Menge und Qualität der Grünpellets und angestrebter Produktspezifikation eingestellt werden und beträgt zwischen 10 Minuten und 180 Minuten. Vorzugsweise werden die Grünpellets 10 Minuten bis 180 Minuten bei 500°C bis 1100°C kalziniert.

Die Grünpellets werden in dem kippbaren Drehtrommelofen vorzugsweise derart kalziniert, dass die angestrebten Produkteigenschaften durch verschiedene Kalzinierungsgrade zwischen Teil- und Vollkalzination erzielt werden.

Des Weiteren ist es bevorzugt, dass der kippbare Drehtrommelofen während der Kalzinierung mit einer Drehgeschwindigkeit der Ofentrommel des Drehtrommelofens von weniger als 10 Umdrehungen pro Minute, vorzugsweise weniger als 8 Umdrehungen pro Minute, gedreht wird. Durch diese niedrige Drehgeschwindigkeit wird die Abrasion möglichst gering gehalten, gleichsam jedoch eine gleichmäßige Wärmeübertragung gewährleistet. Die Drehgeschwindigkeit der Trommel kann gegebenenfalls für einzelne Chargen und/oder während des Kalzinierungsprozesses angepasst (verändert) werden.

Nach Einstellung des angestrebten Kalzinierungsgrades kann das Aluminiumoxid-Kalzinat teilweise oder vollständig durch gezieltes Kippen und Drehen des Ofens ausgetragen werden. Vorzugsweise wird das teilweise oder vollständig kalzinierte Material aus dem kippbaren Drehtrommelofen ausgetragen oder abgezogen und im unmittelbaren Anschluss in einer Kühlvorrichtung kontrolliert abgekühlt. Vorzugsweise wird eine schnelle Abkühlung um 100°C bis 500°C in einem Zeitfenster von 0,1 Sekunden bis 30 Sekunden durch Einsatz von Kühlvorrichtungen, beispielsweise einer Kühlplatte, vorgenommen.

Die Erfindung wird nachfolgend anhand der beiliegenden Figuren weiter beschrieben. In den Figuren zeigt:
Fig. 1 ein Prozessschaubild des erfindungsgemäßen Verfahrens;
Fig. 2 einen Verfahrensschritt des erfindungsgemäßen Verfahrens und
Fig. 3 einen weiteren Verfahrensschritt des erfindungsgemäßen Verfahrens.

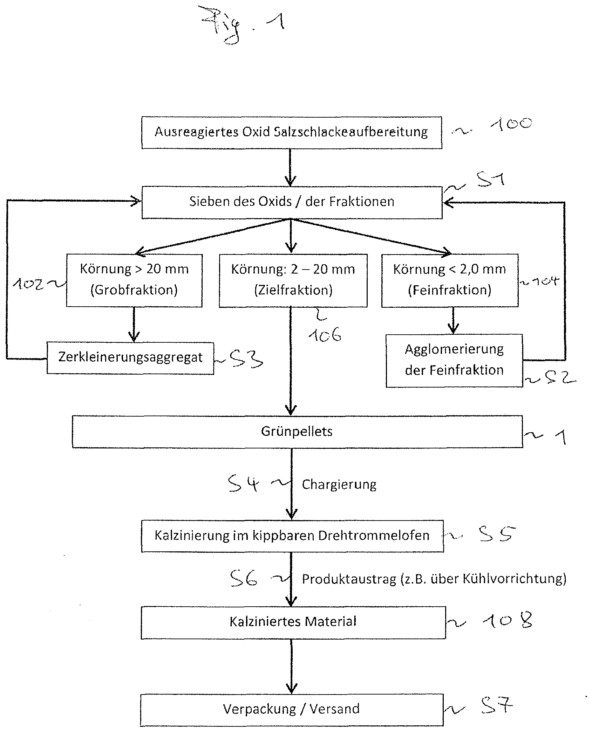

Das erfindungsgemäße Verfahren wird zunächst anhand des Prozessschaubilds der Fig. 1 beschrieben. Ein Aluminiumoxid-haltiges Ausgangsmaterial aus einer Aluminium-Salzschlackeaufbereitung (ausreagiertes Oxid einer Salzschlackeaufbereitung 100) wird, vorzugsweise nach einer Vortrocknung, gesiebt (Schritt S1) und in eine Grobfraktion 102, eine Feinfraktion 104, sowie eine Zielfraktion 106 fraktioniert. Die Ziel- und Grobfraktion enthält Partikel (Grünpellets) mit einer Körnung von beispielsweise größer 2,0 mm. Die Feinfraktion enthält Partikel mit einer Körnung von beispielsweise kleiner 2,0 mm. Die Zielfraktion 106 wird direkt, ohne zwischengeschaltete Pelletierung, insbesondere ohne Bindemittel, als Grünpellets 1 in den kippbaren Drehtrommelofen chargiert (Schritt S4). Die Feinfraktion wird vorzugsweise agglomeriert (Schritt S2), beispielsweise mittels eines Pelletiertellers, einer Pelletiertrommel oder eines Granuliermischers, und entweder (insbesondere nach einem erneuten Sieben) ebenfalls in den Ofen chargiert (Schritt S4) oder einer anderen Verwendung zugeführt. Die Grobfraktion 102 wird in einem Zerkleinerungsaggregat (Schritt S3) auf eine Körnung unter 20 mm zerkleinert und erneut abgesiebt (Schritt S1). Nach Befüllung des kippbaren Drehtrommelofens erfolgt die Kalzinierung (Schritt S5), also das Brennen des Aluminiumoxid-haltigen Ausgangsmaterials bzw. der Grünpellets 1. Durch die gezielte Erhitzung und Prozessführung entsteht das gewünschte kalzinierte Material 108. Dieses Material 108 wird anschließend aus dem kippbaren Drehtrommelofen ausgetragen (Schritt S6) und anschließend der Verpackung / dem Versand zugeführt (Schritt S7).

### Beispiel 1

Als Ausgangsmaterial wurde eine Aluminium-Salzschlackeaufbereitung (aluminiumoxidhaltiger Stoff aus einer Salzschlackeaufbereitung) mit folgenden Eigenschaften eingesetzt:

**Zusammensetzung:**

| | | | |
|---|---|---|---|
| Natriumoxid | nach DIN EN 196-2 (17.4.2) | Gew.-% | 2,45 |
| Kaliumoxid | nach DIN EN 196-2 (17.4.2) | Gew.-% | 1,65 |
| Na₂O Äquivalent | nach DIN EN 196-2 (17.4.2) | Gew.-% | 3,54 |
| Fluorid | Photometrisch | Gew.-% | 4,6 |
| Chlorid quantitativ | nach DIN EN 196-2 | Gew.-% | 0,526 |
| Kohlendioxid | 950°C/IR | Gew.-% | 0,24 |
| Wasser | 950°C/IR | Gew.-% | 8,76 |
| Glühverlust | Summe CO₂, H₂O | Gew.-% | 9,00 |
| Silizium(IV)oxid | RFA | Gew.-% | 5,48 |
| Aluminiumoxid | RFA | Gew.-% | 66,65 |
| Titandioxid | RFA | Gew.-% | 0,31 |
| Phosphor(V)oxid | RFA | Gew.-% | 0,13 |
| Eisen(III)-oxid | RFA | Gew.-% | 0,77 |
| Mangan(III)-oxid | RFA | Gew.-% | 0,23 |
| Magnesiumoxid | RFA | Gew.-% | 6,12 |
| Calciumoxid | RFA | Gew.-% | 1,62 |
| Sulfat als SO₃ | RFA | Gew.-% | 0,42 |

Aus dem Ausgangsmaterial wurden zunächst Grünpellets hergestellt. Die Grünpellets wurden in einen kippbaren Drehtrommelofen eingegeben, der bereits auf ein Temperaturniveau von 450 - 850°C vorgeheizt wurde. Anschließend wurde dem Material weiter Energie zugeführt, bis eine Temperatur von 500 - 1.100°C erreicht war und das Material rotglühend vorlag. Dabei wurde der Drehtrommelofen kontinuierlich mit langsamer Geschwindigkeit, nämlich weniger als 8 Umdrehungen pro Minute, gedreht. Die Verweilzeit des Materials im rotglühenden Zustand betrug ca. 15 bis 60 Minuten. Beim Abzugsprozess wurde eine schnelle Abkühlung um 150°C - 200°C mittels einer Kühlvorrichtung vorgenommen, wozu beispielsweise eine Kühlplatte genutzt wurde. Anschließend wurde das kalzinierte Material gesiebt und in eine Pelletfraktion sowie einen Feinanteil getrennt. Das kalzinierte Material war vollständig kalziniert und hart. Die Pellets waren in einem definierten Größenbereich und waren abgerundet geformt, ähnlich wie Kieselsteine.

Grundsätzlich können für das Verfahren unterschiedliche Ofengrößen genutzt werden, wodurch unterschiedliche Chargier- und Durchsatzmengen realisiert werden können. Im Beispiel wurde ein konisch geformter Drehtrommelofen mit einem Durchmesser von ca. 2 bis 3 Metern, einer Länge von ca. 4 bis 5 Metern und einem maximalen Kippwinkel von 20° verwendet.

### Beispiel 2

Als Ausgangsmaterial wurde eine Aluminium-Salzschlackeaufbereitung (aluminiumoxidhaltiger Stoff aus einer Salzschlackeaufbereitung) mit folgenden Eigenschaften eingesetzt:

**Zusammensetzung :**

| Chemische Analyse Gew.-% (Trockengewicht) | Min | Max |
|---|---|---|
| Al₂O₃ | 65,00 | 75,00 |
| CaO | 1,30 | 1,70 |
| Fe₂O₃ | 0,90 | 1,20 |
| Na₂O | 1,50 | 2,50 |
| K₂O | 0,60 | 1,20 |
| MgO | 5,50 | 6,70 |
| SiO₂ | 5,50 | 9,50 |
| TiO₂ | 0,20 | 0,40 |
| F⁻ | 1,50 | 5,50 |
| Cl (total) | 0,20 | 0,80 |
| S (total) | | < 0,02 |
| PO₄³⁻ | | < 0,10 |
| Stickstoff total | 0,10 | 0,70 |
| LOI 1.000°C | 5,50 | 11,50 |

### Weitere Informationen:

| | | |
|---|---|---|
| Feuchtigkeit [Gew.%] | <15,00 | |
| Partikelgröße [mm] / Anteil [Gew.-%] | 1,0 - 15,0 | / 70 |
| Schüttgewicht [t/m³] | 1,1 | |

### Mineralogische Zusammensetzung:

| | | |
|---|---|---|
| Al₂O₃ | - | Transferoxide |
| Al₂O₃ | - | Korund |
| MgO·Al₂O₃ | - | Spinell |

Mit diesem Ausgangsmaterial kann das erfindungsgemäße Verfahren durchgeführt werden, z.B. mit den Bedingungen und Einstellungen wie in Beispiel 1 beschrieben.

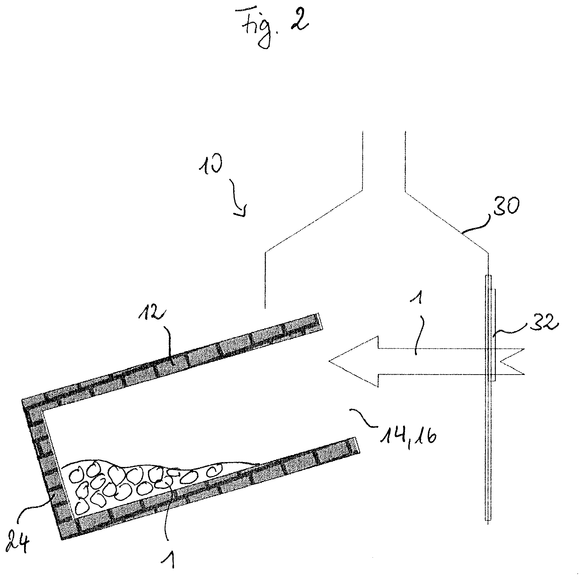

Fig. 2 zeigt schematisch das Einfüllen von Grünpellets 1 in einen kippbaren Drehtrommelofen 10 zur Durchführung der Kalzinierung. Der kippbare Drehtrommelofen 10 weist eine Trommel 12 aus einem feuerfesten Material auf, die um einen Winkel von beispielsweise etwa 20° gegenüber der Horizontalen verkippt ist. Die Trommel 12 weist an einem ersten Längsende 14 eine Chargieröffnung bzw. Einfüllöffnung 16 auf und ist an einem gegenüberliegenden, zweiten Längsende 24 verschlossen. Der kippbare Drehtrommelofen 10 umfasst zudem eine Abgaserfassung 30 und ein schwenkbares Türsystem 32, durch das die Grünpellets 1 zugegeben werden können. Zudem kann durch das Türsystem 32 der Prozess beobachtet werden.

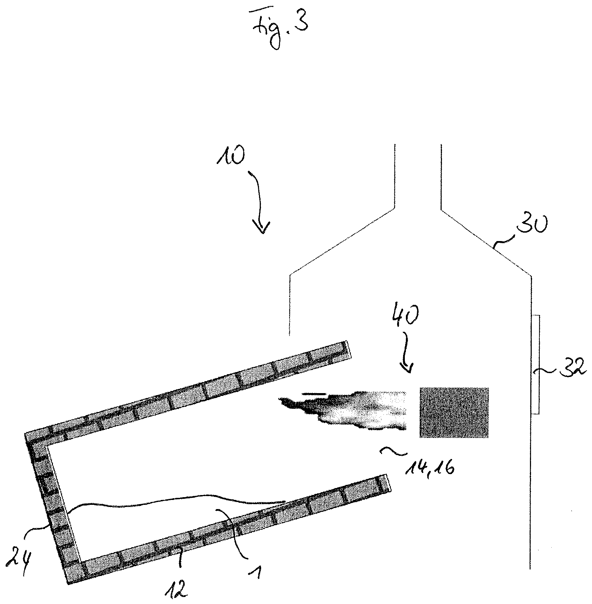

Fig. 3 zeigt schematisch den Prozess der Kalzinierung der Grünpellets 1 in dem kippbaren Drehtrommelofen 10. Vor dem Ofenkörper ist ein Brenner 40 angeordnet, welcher zur Erhitzung des Innenraums der Trommel 12 vorgesehen ist. Durch Erhitzung der Trommel 12 werden die Grünpellets 1 zu kalzinierten Pellets bzw. einem kalzinierten Material gebrannt. Das kalzinierte Material wird anschließend aus der Trommel 12 entnommen und einer Kühlung zugeführt.

Insgesamt betrifft die Erfindung insbesondere ein Verfahren zur Herstellung von agglomerierten und nicht agglomerierten Aluminiumoxid-Kalzinaten in einem kippbaren Drehtrommelofen ohne oder mit Einsatz von Bindemitteln, aufweisend die Schritte: Agglomerieren eines Aluminiumoxid-haltigen Ausgangsstoffes, insbesondere eines Konzentrates Aluminium-oxidischer Verunreinigungen aus dem Aufbereitungsprozess einer Aluminiumsalzschlacke, mit oder ohne Bindemitteln zu kugeligen Körpern (Grünpellets), und Kalzinieren des zu Grünpellets agglomerierten Aluminiumoxid-haltigen Konzentrates in einem kippbaren Drehtrommelofen zu einem teilweise oder vollständig kalzinierten Material.

Die Erfindung stellt eine wirtschaftliche und zuverlässige Möglichkeit der Herstellung von Aluminiumoxid-Kalzinaten aus einem Aluminiumoxid-haltigen Ausgangsmaterial durch thermische Behandlung in einem kippbaren Drehtrommelofen bereit.

## Patentansprüche

1. Verfahren zur Herstellung von Aluminiumoxid-Kalzinaten,
**gekennzeichnet durch** die folgenden Schritte:
- Bereitstellen eines Aluminiumoxid-haltigen Konzentrates einer aufbereiteten Aluminiumsalzschlacke als Ausgangsmaterial, und
- Kalzinieren des Aluminiumoxid-haltigen Ausgangsmaterials in einem kippbaren Drehtrommelofen (10) zu einem teilweise oder vollständig kalzinierten Material, wobei das Aluminiumoxid-haltige Ausgangsmaterial in den auf 400°C bis 850°C vorgeheizten, kippbaren Drehtrommelofen (10) eingebracht und anschließend auf 500°C bis 1100°C erhitzt wird,
- und wobei das Aluminiumoxid-haltige Ausgangsmaterial vor der Kalzinierung bis auf ein Niveau von 5 Gew.-% bis 15 Gew.-% entwässert und getrocknet wird.

2. Verfahren nach Anspruch 1,
**dadurch gekennzeichnet,**
**dass** das Aluminiumoxid-haltige Ausgangsmaterial 50 Gew.-% bis 90 Gew.-% Aluminiumoxid enthält.

3. Verfahren nach Anspruch 1 oder 2,
**dadurch gekennzeichnet,**
**dass** das Aluminiumoxid-haltige Ausgangsmaterial vor der Kalzinierung bis auf ein Niveau von 5 Gew.-% bis 15 Gew.-% auf einem Bandfilter entwässert und getrocknet wird, insbesondere durch Ausnutzung einer exothermen Nachreaktion.

4. Verfahren nach einem der Ansprüche 1 bis 3,
**dadurch gekennzeichnet,**
**dass** das Aluminiumoxid-haltige Ausgangsmaterial vor der Kalzinierung, vorzugsweise ohne Bindemittelzugabe, zu Grünpellets, vorzugsweise mit einem Korngrößenbereich von 2 mm bis 20 mm, agglomeriert wird.

5. Verfahren nach einem der Ansprüche 1 bis 4,
**dadurch gekennzeichnet,**
**dass** das Aluminiumoxid-haltige Ausgangsmaterial, insbesondere nach der Trocknung und/oder nach einer Agglomeration und/oder vor der Kalzinierung, fraktioniert wird.

6. Verfahren nach einem der Ansprüche 1 bis 5,
**dadurch gekennzeichnet,**
**dass** das Aluminiumoxid-haltige Ausgangsmaterial durch einen Abrollvorgang auf einer schiefen Ebene zu Grünpellets, vorzugsweise mit einem Korngrößenbereich von 2 mm bis 20 mm, agglomeriert wird.

7. Verfahren nach einem der Ansprüche 1 bis 6,
**dadurch gekennzeichnet,**
**dass** Grünpellets, insbesondere mit einem Korngrößenbereich von 2 mm bis 20 mm, in den kippbaren Drehtrommelofen (10) eingebracht werden.

8. Verfahren nach einem der Ansprüche 1 bis 7,
**dadurch gekennzeichnet,**
**dass** das Aluminiumoxid-haltige Ausgangsmaterial, insbesondere die Grünpellets, 10 Minuten bis 180 Minuten bei 500°C bis 1100°C kalziniert werden.

9. Verfahren nach einem der Ansprüche 1 bis 8,
**dadurch gekennzeichnet,**
**dass** der kippbare Drehtrommelofen (10) während der Kalzinierung mit einer Drehgeschwindigkeit von weniger als 10 Umdrehungen pro Minute gedreht wird.

10. Verfahren nach einem der Ansprüche 1 bis 9,
**dadurch gekennzeichnet,**
**dass** das teilweise oder vollständig kalzinierte Material aus dem kippbaren Drehtrommelofen (10) abgezogen und im unmittelbaren Anschluss in einer Kühlvorrichtung kontrolliert abgekühlt wird.

## Claims

1. Process for preparing aluminium oxide calcinates, **characterized by** the following steps:
- provision of an aluminium oxide-containing concentrate of a treated aluminium salt slag as starting material, and
- calcination of the aluminium oxide-containing starting material in a tiltable rotary drum furnace (10) to give a partially or completely calcined material, whereby the aluminium oxide-containing starting material is introduced into the tiltable rotary drum furnace (10) which has been preheated to from 400°C to 850°C and is subsequently heated to from 500°C to 1100°C,
- and whereby the aluminium oxide-containing starting material is dewatered and dried to a level of from 5% by weight to 15% by weight before the calcination.

2. Process according to claim 1,
**characterized in that**
the aluminium oxide-containing starting material contains from 50% by weight to 90% by weight of aluminium oxide.

3. Process according to claim 1 or 2,
**characterized in that**
the aluminium oxide-containing starting material is dewatered and dried to a level of from 5% by weight to 15% by weight on a belt filter, in particular by exploitation of an exothermic after-reaction, before the calcination.

4. Process according to any of claims 1 to 3,
**characterized in that**
the aluminium oxide-containing starting material is agglomerated, preferably without addition of binding agents, to give green pellets, preferably having a particle size range from 2 mm to 20 mm, before the calcination.

5. Process according to any of claims 1 to 4,
**characterized in that**
the aluminium oxide-containing starting material is fractionated, in particular after drying and/or after agglomeration and/or before calcination.

6. Process according to any of claims 1 to 5,
**characterized in that**
the aluminium oxide-containing starting material is agglomerated to give green pellets, preferably having a particle size range from 2 mm to 20 mm, by means of a process of rolling down an inclined plane.

7. Process according to any of claims 1 to 6,
**characterized in that**
green pellets, in particular having a particle size range from 2 mm to 20 mm, are introduced into the tiltable rotary drum furnace (10).

8. Process according to any of claims 1 to 7,
**characterized in that**
the aluminium oxide-containing starting material, in particular the green pellets, are calcined at from 500°C to 1100°C for from 10 minutes to 180 minutes.

9. Process according to any of claims 1 to 8,
**characterized in that**
the tiltable rotary drum furnace (10) is rotated at a speed of rotation of less than 10 revolutions per minute during the calcination.

10. Process according to any of claims 1 to 9,
**characterized in that**
the partially or completely calcined material is taken off from the tiltable rotary drum furnace (10) and is immediately afterwards cooled in a controlled manner in a cooling apparatus.

## Revendications

1. Procédé de préparation de calcinats d'alumine,
**caractérisé par** les étapes suivantes :
- préparation d'un concentré contenant de l'alumine d'un laitier de sel d'aluminium traité, à titre de matériau de départ, et
- calcination du matériau de départ contenant de l'alumine dans un four inclinable à tambour rotatif (10) pour donner un matériau partiellement ou totalement calciné, le matériau de départ contenant de l'alumine étant introduit dans le four inclinable à tambour rotatif (10) préchauffé à une température de 400 °C à 850 °C, puis chauffé à une température de 500 °C à 1100 °C,
- et, avant la calcination, le matériau de départ contenant de l'alumine est déshydraté et séché à un niveau de 5 % en poids à 15 % en poids.

2. Procédé selon la revendication 1,
**caractérisé en ce que**
le matériau de départ contenant de l'alumine contient 50 % en poids à 90 % en poids d'alumine.

3. Procédé selon la revendication 1 ou 2,
**caractérisé en ce que**
avant la calcination, le matériau de départ contenant de l'alumine est déshydraté et séché à un niveau de 5 % en poids à 15 % en poids sur un filtre à bande, en particulier en exploitant une post-réaction exothermique.

4. Procédé selon l'une des revendications 1 à 3,
**caractérisé en ce que**
avant la calcination, le matériau de départ contenant de l'alumine est aggloméré pour donner des pastilles crues, ayant de préférence une granulométrie dans la plage de 2 mm à 20 mm, de préférence sans ajout de liants.

5. Procédé selon l'une des revendications 1 à 4,
**caractérisé en ce que**
le matériau de départ contenant de l'alumine est fractionné, en particulier après le séchage et/ou après une agglomération et/ou avant la calcination.

6. Procédé selon l'une des revendications 1 à 5,
**caractérisé en ce que**
le matériau de départ contenant de l'alumine est aggloméré pour donner des pastilles crues, ayant de préférence une granulométrie dans la plage de 2 mm à 20 mm, par une opération de roulement sur un plan incliné.

7. Procédé selon l'une des revendications 1 à 6,
**caractérisé en ce que**
des pastilles crues, ayant de préférence une granulométrie dans la plage de 2 mm à 20 mm, sont introduites dans le four inclinable à tambour rotatif (10).

8. Procédé selon l'une des revendications 1 à 7,
**caractérisé en ce que**
le matériau de départ contenant de l'alumine, en particulier les pastilles crues, est calciné pendant 10 minutes à 180 minutes à une température de 500 °C à 1100 °C.

9. Procédé selon l'une des revendications 1 à 8,
**caractérisé en ce que**
le four inclinable à tambour rotatif (10) est mis en rotation à une vitesse de rotation de moins de 10 tours par minute, pendant la calcination.

10. Procédé selon l'une des revendications 1 à 9,
**caractérisé en ce que**
le matériau calciné partiellement ou complètement est extrait du four inclinable à tambour rotatif (10) et, directement à la suite, il est refroidi de façon contrôlée dans un dispositif de refroidissement.
